# EUROPÄISCHE PATENTSCHRIFT

(11) **EP 0 910 595 B1**
(45) Veröffentlichungstag und Bekanntmachung des Hinweises auf die Patenterteilung: **25.07.2001**
(21) Anmeldenummer: 97929283.6
(22) Anmeldetag: 25.06.1997
(51) Int. Cl.: C08G 12/38

(54) **MODIFIZIERTE MELAMINHARZE UND DEREN VERWENDUNG ZUR HERSTELLUNG VON POSTFORMING-FÄHIGEN LAMINATEN**
MODIFIED MELAMINE RESINS AND THEIR USE FOR PRODUCING POSTFORMABLE LAMINATES
RESINES DE MELAMINE MODIFIEES ET LEUR UTILISATION POUR FABRIQUER DES STRATIFIES POSTFORMABLES

(30) Priorität: 12.07.1996 AT 125596
(43) Veröffentlichungstag der Anmeldung: 28.04.1999
(73) Patentinhaber: Agrolinz Melamin GmbH, A-4021 Linz (AT)
(72) Erfinder: CONTI, Natale, I-21030 Varese (IT); HEGER, Friedl, A-4040 Linz (AT)
(74) Vertreter: VA TECH Patente GmbH
(86) Internationale Anmeldenummer: EP9703321
(87) Internationale Veröffentlichungsnummer: WO9802474

(56) Entgegenhaltungen:
- EP-A- 0 007 705
- EP-A- 0 014 891
- EP-A- 0 052 212
- WO-A-96/20230

## Beschreibung

Melaminharz-Laminate auf Basis von imprägnierten Papieren finden aufgrund ihrer guten Lichtechtheit, Abriebfestigkeit, Chemikalienbeständigkeit, Glutbeständigkeit und Oberflächenhärte ein großes Einsatzgebiet als Dekor- und Schutzoberflächen.

Derartige Schichtpreßstoffe, die durch Imprägnieren von Trägerbahnen aus Textilien, Papier oder Glasvliesen mit wäßrigen Lösungen von Melamin-Formaldehyd-Vorkondensaten und anschließendes Trocknen und Aushärten bei Temperaturen von über 100°C erhalten werden, sind beispielsweise in EP-A-0 077 067 beschrieben. In der EP-B1-0 268 809 sind Melaminharzfolien beschrieben, die durch Beschichten von Papieren mit einer mindestens 70 Gew.%igen wäßrigen Lösung eines methylveretherten Melaminharzes erhalten werden.
Der Nachteil dieser bekannten Melaminharze und Melaminharz-Laminate liegt insbesondere darin, daß sie beim Aushärten eine relativ große Schwindung aufweisen, daß ihre mechanischen Eigenschaften, wie beispielsweise Kochwasserresistenz, in vielen Fällen nicht ausreichend sind, und daß sie vor allem sehr spröde sind und keine post-forming-Eigenschaften aufweisen.

Aus US 4,424,261 ist bekannt, daß die Verwendung von Hydroxyalkylmelaminen als Modifizierungsmittel für Melamin-Formaldehydharze zu einer Verbesserung der post-forming-Eigenschaften führt. Der Nachteil dieser Modifizierungsmittel ist jedoch deren Instabilität, wodurch sie nicht leicht verfügbar und weiters nur schwer handhabbar sind, da sie stark zur Vernetzung mit sich selbst neigen. Andere Modifizierungsmittel, wie beispielsweise Guanamine, die zu post-forming-Eigenschaften der Harze führen, sind in EP-A1-0 561 432 beschrieben. Guanamine, besonders solche mit aromatischen Kernen wie Benzoguanamin, weisen jedoch keine ausreichende Resistenz gegen Licht auf, wodurch die modifizierten Harze leicht vergilben. Weiters wirkt sich die geringe Löslichkeit der Guanamine im Reaktionsmedium nachteilig auf den Herstellprozeß der Harze aus.

Aus WO-A-9620 230 sind weiters Harze aus den Komponenten Formaldehyd Melamin, Dicyandiamid in einer Menge von 5 bis 25 Gew.% bezogen auf Melamin und einem Polyalkohol wie Trimethylolpropan in einer Menge von 8 bis 30 Gew.% bezogen auf Melamin bekannt. Diese Harze weisen zwar auch post-forming Eigenschaften und Kochwasserresistenz auf, die Möglichkeit diese Harze durch Sprühtrocknung in Pulverform zu überführen ist nicht beschrieben.

EP-A-0 007 705 beschreibt Harze, die aus Melamin, Formaldehyd und einem Hydroxymonoamin bestehen, wobei ein Teil des Melamins durch Harnstoff ersetzt wird. Eigenschaften wie post forming, Kochwasserresistenz und Sprühtrocknungsfähigkeit sind nicht beschrieben.

Es war somit notwendig ein Modifizierungsmittel für Melaminharze zu finden, das die Nachteile der bisher bekannten Modifizierungsmittel nicht aufweist und die post-forming-Eigenschaften der Melaminharze ohne ihre Kochwasserresistenz zu reduzieren stark verbessert und die zu sprühtrockenbaren Harzen führt. Unerwarteterweise wurde nun gefunden, daß derartige Melaminharze durch Verwendung spezieller Modifizierungsmittel, enthaltend eine Kombination aus bestimmten Polyalkoholen und Dicyandiamid oder bestimmte Amine, und Zusatz von Harnstoff, erhalten werden.

Gegenstand der vorliegenden Erfindung sind demnach modifizierte Melamin-Formaldehydharze, die dadurch gekennzeichnet sind, daß sie aus einem Kondensat aus Formaldehyd, Melamin, Harnstoff und Modifizierungsmittel, enthaltend
a) eine Kombination aus 5 bis 25 Gew.%, bezogen auf Melamin, an Dicyandiamid und 8 bis 30 Gew.%, bezogen auf Melamin, an Polyalkohol der Formel

   R₁-(R₂OH)₃ Ia

   oder

   HOR₄-R₃-R₅OH Ib

   wobei in der Formel la R₁ einen Rest der Formel

   C-(CH₂)ₙ-CH₃ mit n gleich 0 bis 3 II

   und R₂ einen linearen oder verzweigten (C₁ bis C₄)Alkylenrest bedeuten und in der Formel Ib R₃ einen Cycloalkylenrest mit 6 C-Atomen oder R₃, wie R₄ und R₅ einen linearen oder verzweigten (C₁ bis C₆)Alkylenrest, der gegebenenfalls mit einer weiteren Hydroxygruppe substituiert sein kann, bedeutet, wobei R₃, R₄ und R₅ gleich oder verschieden sein können, und/oder
b) Amine der Formeln

   NR₉R₁₀ ― R₆ - X IIIa

   und/oder

   NR₉R₁₀ ― R₇ - Y ― R₈ - X IIIb

   in denen R₆ und R₈ gleich oder verschieden sein können und in Abhängigkeit von der Bedeutung von X einen linearen oder verzweigten oder cyclischen C₁ bis C₁₂-Alkyl- oder Alkylenrest und R₇ einen linearen oder verzweigten oder cyclischen C₁ bis C₁₂-Alkylenrest bedeuten, R₉ und R₁₀ gleich oder verschieden sein können und H oder einen linearen oder verzweigten C₁ bis C₁₂-Alkylrest bedeuten und X Wasserstoff, OH oder NR₉R₁₀ und Y -O- oder -NH- sein kann, bestehen,
   wobei das molare Verhältnis Melamin zu Formaldehyd 1 : 1,2 bis 1 : 5 und von Melamin zu Harnstoff 1 : 0,1 bis 1 : 2,8 beträgt.

Die erfindungsgemäßen Melaminharze sind somit durch eine Kombination aus Dicyandiamid mit Polyalkoholen, der Formel la oder Ib, oder durch die speziellen Amine der Formeln IIIa und/oder IIIb modifiziert.

Polyalkohole, der Formel la oder Ib weisen zumindest zwei Hydroxyalkylgruppen auf, und sind dabei Verbindungen, bei welchen die Hydroxyalkylgruppen an eine aliphatische, cycloaliphatische oder heterocyclische Kernstruktur gebunden sind. Unter aliphatischen Kernstrukturen sind dabei lineare oder verzweigte C₁ bis C₁₀ Alkylengruppen zu verstehen, die gegebenenfalls mit Carbonyl-, Amino- oder (C₁ - C6)-Alkoxygruppen substituiert sein können. Als cycloaliphatische Kernstruktur kommen C₅ bis C₈ Cycloalkylengruppen in Frage, die ebenso gegebenenfalls neben den Hydroxyalkylgruppen weitere Substituenten wie etwa Carbonylgruppen aufweisen können. Die heterocyclische Kernstruktur kann im Cyclus 1 bis 3 Heteroatome wie N, O oder S und gegebenenfalls weitere Substituenten, wie etwa Carbonylreste aufweisen. Der Alkylteil der Hydroxyalkylgruppen weist dabei 1 bis 6 C-Atome auf.

Bevorzugt sind Polyalkohole der Formel

R₁-(R₂OH)₃ Ia

oder

HOR₄-R₃-R₅OH Ib

wobei in der Formel la R₁ einen Rest der Formel

C-(CH₂)n-CH₃ II

mit n gleich 0 bis 3 bedeutet und R₂ einen linearen oder verzweigten (C₁ bis C₄)-Alkylenrest.

In der Formel Ib) bedeuten R₃, R₄ und R₅ einen linearen oder verzweigten (C₁ bis C₆)-Alkylenrest, der gegebenenfalls mit einer weiteren Hydroxygruppe substituiert sein kann.
R₃, R₄ und R₅ können dabei gleich oder verschieden sein.
R₃ kann weiters auch ein Cycloalkylenrest mit 6 C-Atomen sein.
Besonders bevorzugte Polyalkohole sind dabei Trimethylolpropan, Trimethylolethan, Trishydroxyethylisocyanurat, Neopentylglycol, 1,4-Dimethylolcyclohexan, 4-Methyl-2,4-pentandiol, 1,6-Hexandiol, 3-Methyl-1,3,5-pentantriol und 2,2,4-Trimethyl-1,3-pentandiol.

Die Polyalkohole können sowohl als Einzelverbindung als auch als Gemisch mehrerer Polyalkohole zugesetzt werden. Die Menge an Polyalkohol im erfindungsgemäßen Melaminharz beträgt etwa 8 bis 30 Gew.%, bezogen auf das eingesetzte Melamin. Bevorzugt werden etwa 12 bis 22 Gew.% an Polyalkoholen eingesetzt.

Die Polyalkohole werden erfindungsgemäß in Kombination mit Dicyandiamid als Modifizierungsmittel für Melamin-Formaldehydharze verwendet. Die Menge an Dicyandiamid liegt dabei bei etwa 5 bis 25 Gew.%, bezogen auf das eingesetzte Melamin, bevorzugt bei etwa 8 bis 18 Gew.%.

Die erfindungsgemäßen Melaminharze können anstelle der oben beschriebenen Kombination auch durch Amine der Formeln IIIa und/oder IIIb modifiziert sein.

In den Formeln IIIa und IIIb bedeuten R₆ und R₈, in Abhängigkeit der Bedeutung von X, einen C₁ bis C₁₂-Alkyl- oder Alkylenrest, der linear, verzweigt oder cyclisch sein kann. Beispiele dafür sind Methyl, Ethyl, n-Propyl, i-Propyl, n-Butyl, sek.-Butyl, tert.-Butyl, Hexyl, Decyl, Dodecyl, Methylen, Ethylen, n-Propylen, i-Propylen, n-Butylen, sek.-Butylen, tert.-Butylen, Hexylen, Decylen, Dodecylen, Cyclohexyl oder Cyclodecyl. Cyclische Reste können dabei gegebenenfalls durch weitere Alkylgruppen substituiert sein.
Bevorzugt sind lineare, verzweigte oder cyclische C₁ bis C₆-Alkyl- oder Alkylenreste.
R₇ bedeutet in der Formel IIIb einen wie oben definierten linearen, verzweigten oder cyclischen C₁-C₁₂-Alkylenrest. Bevorzugt sind lineare, verzweigte oder cyclische C₁-C₆-Alkylenreste. R₉ und R₁₀ können in den Formeln IIIa und IIIb gleich oder verschieden sein und H oder einen wie oben definierten linearen oder verzweigten C₁ bis C₁₂-Alkylrest bedeuten. Bevorzugt bedeuten R₉ und R₁₀ Wasserstoff.

X kann in den Formeln IIIa und IIIb Wasserstoff, ein Hydroxyl- oder ein Aminrest sein. Unter Aminrest sind dabei sowohl primäre, sekundäre als auch tertiäre Aminreste der Formel - NR₉R₁₀ zu verstehen, wobei R₉ und R₁₀ wie oben definiert sind.
Y bedeutet in der Formel IIIb -O- oder -NH-.

Beispiele für Amine der Formeln IIIa und IIIb sind
Ethylamin, Butylamin, Hexylamin, Methoxypropylamin, Ethoxypropylamin, Diglycolamin, Ethylendiamin, Propylendiamin, Hexylendiamin oder Isophorondiamin.
Bevorzugt sind Amine wie etwa Ethoxypropylamin, Diglycolamin, oder Isophorondiamin.

Die Amine der Formeln IIIa und IIIb können sowohl als Einzelverbindung als auch als Gemisch mehrerer Amine verwendet werden. Die Menge an Amin im erfindungsgemäßen Melamin-Formaldehydharz beträgt etwa 1,5 bis 20 Gew.%, bezogen auf Melamin. Bevorzugt werden etwa 2,5 bis 15 Gew.% an Amin eingesetzt.
Gegebenenfalls kann auch eine Mischung aus den Modifizierungsmitteln a) und b) eingesetzt werden.
Bevorzugt wird jedoch die Kombination aus Polyalkohol und Dicyandiamid als Modifizierungsmittel eingesetzt.

Das Molverhältnis Melamin zu Formaldehyd liegt bei den zu modifizierenden Harzen bei 1 : 1,2 bis 1 : 5. Bevorzugt werden Melamin und Formaldehyd in einem Molverhältnis von 1 : 1,4 bis 1 : 2,8 eingesetzt.

Weiters wird bei den erfindungsgemäßen Harzen Harnstoff einkondensiert. Das molare Verhältnis von Melamin zu Harnstoff liegt dabei bei 1 : 0,1 bis 1 : 2,8, bevorzugt zwischen 1 : 0,15 bis 1 : 1.

Die erfindungsgemäß modifizierten Melamin-Formaldehydharze werden erhalten, indem man Melamin und Harnstoff mit Formaldehyd in bekannter Weise in wässriger Lösung kondensiert und das Modifizierungsmittel vor oder während der Kondensation in der oben genannten Menge zumischt. Es können dabei, bei Verwendung der Kombination a), die Komponenten Polyalkohol und Dicyandiamid sowohl als Mischung als auch als Einzelkomponenten zugegeben werden. Zur Herstellung der erfindungsgemäßen Harze kann jedoch auch eine fertige Mischung bestehend aus Melamin, Harnstoff, Formaldehyd, Amin bzw. Dicyandiamid und Polyalkohol eingesetzt werden.

Ein weiterer Gegenstand der vorliegenden Erfindung ist demnach die Verwendung einer Mischung aus Formaldehyd, Harnstoff, Melamin und
a) 5 bis 25 Gew.%, bezogen auf Melamin, an Dicyandiamid und 8 bis 30 Gew.%, bezogen auf Melamin, an Polyalkohol der Formel

   R₁-(R₂OH)₃ Ia

   oder

   HOR₄-R₃-R₅OH Ib

   wobei in der Formel la R₁ einen Rest der Formel

   C-(CH₂)ₙ-CH₃ mit n gleich 0 bis 3 II

   und R₂ einen linearen oder verzweigten (C₁ bis C₄)Alkylenrest bedeuten und in der Formel Ib R₃ einen Cycloalkylenrest mit 6 C-Atomen oder R₃, wie R₄ und R₅ einen linearen oder verzweigten (C₁ bis C₆)Alkylenrest, der gegebenenfalls mit einer weiteren Hydroxygruppe substituiert sein kann, bedeutet, wobei R₃, R₄ und R₅ gleich oder verschieden sein können oder
b) 1,5 bis 20 Gew.%, bezogen auf Melamin, an Aminen der Formel IIIa und oder IIIb, die Melamin und Formaldehyd in einem molaren Verhältnis von 1 : 1,2 bis 1 : 5 und Melamin und Harnstoff in einem molaren Verhältnis von 1 : 0,1 bis 1 : 2,8 enthält, zur Herstellung von modifizierten Melamin-Formaldehydharzen.

Es kann jedoch auch in einer Vorstufe ein hochmodifiziertes Melamin-Formaldehydharze durch Zugabe von 40 bis 60 Gew.% an Amin, bezogen auf Melamin, hergestellt werden. Dieses hochmodifizierte Melamin-Formaldehydharze kann dann als Modifizierungsmittel zur Herstellung der erfindungsgemäßen Melamin-Formaldehydharz (MF-Harz) eingesetzt werden. Das Gewichtsverhältnis von Modifizierungsmittel zu MF-Harz beträgt dabei 1 : 2 bis 1 : 6, bevorzugt 1 : 3.

Ein weiterer Gegenstand der vorliegenden Erfindung ist demnach die Verwendung eines Melamin-Formaldehydharzes das 40 bis 60 Gew.% an Amin der Formel IIIa und/oder IIIb, bezogen auf Melamin und Melamin und Formaldehyd in einem molaren Verhältnis von 1 : 1,2 bis 1 : 5, sowie Melamin und Harnstoff in einem molaren Verhältnis von 1 : 0,1 bis 1 : 2,8 enthält, zur Herstellung von modifizierten Melamin-Formaldehydharzen.

Zur Beschleunigung der Reaktion bei der Modifikation der Melaminharze mit der erfindungsgemäßen Kombination können übliche Katalysatoren, wie z. B. p-Toluolsulfonsäure, in Mengen von etwa 0,1 bis 1 Gew.%, bezogen auf die Gesamtmenge des Melaminharzes, zugesetzt werden.

Den Harzen können weiters auch hydrolysierbare Salze schwacher bis starker Carbonsäuren, Sulfonsäuren oder Mineralsäuren, beispielsweise Diethanolaminacetat, Morpholin, Diethanolamin, Ethanolaminhydrochlorid, Ethylendiaminacetat, Ammoniumrhodanid, Ammoniumlactat, Ethylendiaminphosphat oder das Dimethylethanolaminsalz der p-Toluolsulfonsäure zugefügt werden, um die Härtung zu beschleunigen, ohne daß sich dadurch die Elastizität der Harze verschlechtert.

Bei der Herstellung der Harze können gegebenenfalls noch zusätzliche Modifizierungsmittel wie ε-Caprolactam oder aromatische Sulfonsäureamide, wie p-Toluolsulfonamide, in einer Menge von 0 bis 40 Gew.%, bevorzugt 0 - 20 Gew.%, bezogen auf Melamin, zugegeben werden.
Die Kondensation der Harze wird in der Regel bis zu einer begrenzten Wasserverdünnbarkeit fortgeführt.

Die so hergestellten Harze, sowie die als Modifikationsmittel verwendeten hochmodifizierten Harze können gewünschtenfalls durch Sprühtrocknung in Pulverform überführt werden. Bevorzugt werden die Harze dabei auf eine Restfeuchte von 1 - 1,5 % beispielsweise mittels eines Zentrifugal- oder eines Lufttrockners, getrocknet. Die so getrockneten Harze müssen dann vor ihrer Verwendung in Wasser gelöst werden.

Aufgrund ihrer hervorragenden Eigenschaften, wie Phenolfreiheit und somit umweltfreundlich, keine Abgasprobleme während der Imprägnierung, eignen sich erfindungsgemäß modifizierte Melamin-Formaldehydharze für eine Vielzahl von Anwendungen.

Die erfindungsgemäß modifizierten Melamin-Formaldehydharze eignen sich besonders zur Herstellung von Dekor- oder Schutzoberflächen mit ausgezeichneten post-forming-Eigenschaften. Die Herstellung der Vorprodukte (Filme) der Dekor- oder Schutzoberflächen erfolgt durch Imprägnieren von Papier- oder Gewebebahnen. Papierbahnen sind bevorzugt aus Dekorpapier oder Kraftpapier. Gewebebahnen bestehen dabei bevorzugt aus einem Vlies, Gewebe oder Gelege aus Glas-, Kohle-, Keramik- oder Aramidfasern. Entsprechend den Anforderungen an die Eigenschaften der so hergestellten Laminate, können auch Gemische verschiedener Fasern, unidirektionale Endlosfasern oder mehrere Lagen gleicher oder verschiedener Verstärkungsbahnen eingesetzt werden.

Die Imprägnierung dieser Bahnen mit den erfindungsgemäß modifizierten Melamin-Formaldehydharzen erfolgt beispielsweise durch Tauchen oder Sprühen und anschließendem Abquetschen oder Rakeln bis zum gewünschten Harzgehalt der Filme. Der Harzgehalt ist vor allem von den geforderten Eigenschaften der Filme bzw. der Laminate sowie von der Art der Faserverstärkung abhängig und liegt üblicherweise bei 30 bis 60 Gew.%, bezogen auf das mit Harz imprägnierte Trägermaterial.

Entsprechend der Viskosität und Konsistenz des Melaminharzes erfolgt die Imprägnierung üblicherweise bei Temperaturen von etwa 20 bis 60°C. Um einen lagerfähigen Film zu erhalten, werden die Filme im Anschluß an die Imprägnierung bei etwa 80 bis 160°C auf einen bestimmten Restfeuchtegehalt getrocknet, wobei das leichtfließende Imprägnierharz je nach Temperatur und Länge der thermischen Behandlung mehr oder weniger unter teilweiser Aushärtung und Vernetzung reagiert.
In diesem Zustand ist der Film bei etwa Raumtemperatur lager- und transportfähig. Mehrere Lagen von imprägnierten Kraft- und Dekorpapieren werden dann bei einer Temperatur von120 bis 180°C und unter einem Druck von 25 bis 100 bar zum Laminat verpreßt. Aufgrund der ausgezeichneten post-forming-Eigenschaften kann das Laminat unter weiterer Vernetzung des Melaminharzes bei Temperaturen von 80 bis 180°C unter Druck zum gewünschten Formteil verformt werden.

Die aus den erfindungsgemäß modifizierten Harzen erhaltenen Laminate zeichnen sich vor allem durch eine hohe Kochwasserresistenz, sowie durch eine verbesserte Elastizität ihrer Oberfläche aus, sodaß geringe Biegeradien unter Vermeidung von Rißbildung erreicht werden können.

### Beispiel 1:

In einem Behälter mit Rührer und Rückflußkühler wurden 126 Teile (1mol) Melamin, 146,7 Teile (1,76 mol) an 36 %iger Formaldehydlösung, 20 Teile (0,15 mol) Trimethylolpropan, 14,7 Teile (0,175 mol) Dicyandiamid, 3,6 Teile (0,032 mol) Caprolactam, 10 Teile (0,17 mol) Harnstoff und 70,6 Teile entionisiertem Wasser bei 90°C und einem pH-Wert von 9,3 - 10 (aufrechterhalten durch Natriumhydroxyd) kondensiert bis eine Wasserverdünnbarkeit von etwa 1,2 bei 20°C, (1,0 Volumenteile Harz : 1,2 Volumenteile H₂O) erreicht war.

### Beispiel 2:

Analog Beispiel 1 wurden 126 Teile Melamin (1 mol), 111 Teile Formurea 80 (konzentrierte wäßrige Lösung von Formaldehyd (2,11 mol) und Harnstoff (0,426 mol) hergestellt durch Fa. Agrolinz Melamin Italia), 21,4 Teile (0,16 mol) Trimethylolpropan, 15,9 Teile (0,19 mol) Dicyandiamid, 4 Teile (0,035 mol) Caprolactam und 163,2 Teile entionisiertes Wasser kondensiert.

### Beispiele 3 - 5:

Analog Beispiel 1 wurden weitere modifizierte Harze hergestellt. Der Anteil an Melamin betrug jeweils 126 Teile.
Der Anteil an Formaldehyd (FA), Harnstoff (HS), H₂O, Modifizierungsmittel und dessen Art sind aus Tabelle 1 ersichtlich.

**Tabelle 1:**

| Bsp. | FA (mol) | HS (mol) | DCDA (mol) | TMP (mol) | CL (mol) | DGA (mol) | H₂O Teile |
|---|---|---|---|---|---|---|---|
| 3 | 2,35 | 0,64 | 0,20 | 0,17 | 0,036 | - | 176,6 |
| 4 | 2,56 | 0,87 | 0,11 | 0,08 - | | 0,064 | 175,8 |
| 5 | 3,72 | 1,73 | 0,16 | 0,10 - | | 0,093 | 234,3 |
| DCDA Dicyandiamid | | | | | | | |
| TMP Trimethylolpropan | | | | | | | |
| CL Caprolactam | | | | | | | |
| DGA Diglycolamin | | | | | | | |

### Beispiel 6:

Die Harze aus Beispiel 1 bis 5, wurden mit 0,2 Gew.% Härter EC15 (Agrolinz Melamin Italia) 20 Minuten auf einen Trübungspunkt von100°C katalysiert. Anschließend wurde Dekorpapier sowie Kraftpapier, das als Kernpapier fungierte, imprägniert. Das Dekorpapier (95 g/m²) enthielt 55 Gew.% Harzanteil und 6 Gew.% flüchtige Bestandteile (bezogen auf das imprägnierte Papier), das Kernpapier (80 g/m²) enthielt 47 Gew.% Harzanteil und ebenfalls 6 Gew.% flüchtige Bestandteile (bezogen auf das imprägnierte Papier)

Eine Schicht imprägniertes Dekorpapier und 5 Lagen Kernpapier wurden sodann mit einem Druck von 70 bar bei 175°C für 20 Sekunden zusammengepreßt.
Die so erhaltenen Laminate wurden auf ihre Nachverformbarkeit und ihre Kochwasserresistenz untersucht. Die Ergebnisse sind aus Tabelle 2 ersichtlich.

**Tabelle 2**

| | Nachverformbarkeit Durchmesser in mm(*) | Kochwasserresistenz | |
|---|---|---|---|
| | | Blasenbildung nach 2 und 6 h | Wasserabsorption % 3S EN 438-2 |
| Beispiel 1 | < 3 | keine Blasen | 10,6 |
| Beispiel 2 | < 3 | wenige kleine Blasen | 12,1 |
| Beispiel 3 | < 3 | wenige kleine Blasen | 10,6 |
| Beispiel 4 | < 3 | keine Blasen | 9,4 |
| Beispiel 5 | < 3 | wenige kleine Blasen | 13,1 |

| | | | |
|---|---|---|---|
| (*) kleinster Durchmesser um welchen die auf 160°C aufgeheizte Laminatprobe, (145 x 35 mm), um einen Metallzylinder um 90° gebogen werden kann, ohne zu reißen. | | | |

## Patentansprüche

1. Modifizierte Melamin-Formaldehydharze, dadurch gekennzeichnet, daß sie aus einem Kondensat aus Formaldehyd, Melamin, Harnstoff und Modifizierungsmittel, enthaltend
a) eine Kombination aus 5 bis 25 Gew.%, bezogen auf Melamin, an Dicyandiamid und 8 bis 30 Gew.%, bezogen auf Melamin, an Polyalkohol, der Formel
R₁-(R₂OH)₃ Ia
oder
HOR₄-R₃-R₅OH Ib
wobei in der Formel la R₁ einen Rest der Formel
C-(CH₂)ₙ-CH₃ mit n gleich 0 bis 3 II
und R₂ einen linearen oder verzweigten (C₁ bis C₄)Alkylenrest bedeuten und in der Formel Ib R₃ einen Cycloalkylenrest mit 6 C-Atomen oder R₃, wie R₄ und R₅ einen linearen oder verzweigten (C₁ bis C₆)Alkylenrest, der gegebenenfalls mit einer weiteren Hydroxygruppe substituiert sein kann, bedeutet, wobei R₃, R₄ und R₅ gleich oder verschieden sein können, und/oder
b) 1,5 bis 20 Gew.% an Amine der Formeln
NR₉R₁₀ ― R₆ - X IIIa
und/oder
NR₉R₁₀ ― R₇ - Y ― R₈ - X IIIb
in denen R₆ und R₈ gleich oder verschieden sein können und in Abhängigkeit von der Bedeutung von X einen linearen oder verzweigten oder cyclischen C₁ bis C₁₂-Alkyl- oder Alkylenrest und R₇ einen linearen oder verzweigten oder cyclischen C₁ bis C₁₂-Alkylenrest bedeuten, R₉ und R₁₀ gleich oder verschieden sein können und H oder einen linearen oder verzweigten C₁ bis C₁₂-Alkylrest bedeuten und X Wasserstoff, OH oder NR₉R₁₀ und Y -O- oder -NH- sein kann,
bestehen, wobei das molare Verhältnis von Melamin zu Formaldehyd 1 : 1,2 bis 1 : 5 und von Melamin zu Harnstoff 1 : 0,1 bis 1 : 2,8 beträgt.

2. Modifizierte Melamin-Formaldehydharze nach Anspruch 1, dadurch gekennzeichnet, daß das Modifizierungsmittel eine Kombination aus Dicyandiamid und Polyalkohol der Formel la oder Ib, enthält.

3. Modifizierte Melamin-Formaldehydharze nach Anspruch 1, dadurch gekennzeichnet, daß als Polyalkohol Trimethylolpropan, Trimethylolethan, Trishydroxyethylisocyanurat, Neopentylglycol, 1,4-Dimethylolcyclohexan, 4-Methyl-2,4-pentandiol, 1,6-Hexandiol, 3-Methyl-1,3,5-Pentandiol oder 2,2,4-Trimethyl-1,3-pentandiol oder Gemische davon eingesetzt werden.

4. Modifizierte Melamin-Formaldehydharze nach Anspruch 1, dadurch gekennzeichnet, daß sie Melamin und Formaldehyd in einem molaren Verhältnis von 1 : 1,4 bis 1 : 2,8 und Melamin und Harnstoff in einem molaren Verhältnis von 1 : 0,15 bis 1 : 1 enthalten.

5. Modifizierte Melamin-Formaldehydharze nach Anspruch 1, dadurch gekennzeichnet, daß sie in flüssiger oder sprühgetrocknet in Pulverform vorliegen.

6. Verwendung einer Mischung aus Formaldehyd, Harnstoff, Melamin und a) 5 bis 25 Gew.%, bezogen auf Melamin, an Dicyandiamid und 8 bis 30 Gew.%, bezogen auf Melamin, an Polyalkohol der Formel
R₁-(R₂OH)₃ Ia
oder
HOR₄-R₃-R₅OH Ib
wobei in der Formel la R₁ einen Rest der Formel
C-(CH₂)ₙ-CH₃ mit n gleich 0 bis 3 II
und R₂ einen linearen oder verzweigten (C₁ bis C₄)Alkylenrest bedeuten und in der Formel Ib R₃ einen Cycloalkylenrest mit 6 C-Atomen oder R₃, wie R₄ und R₅ einen linearen oder verzweigten (C₁ bis C₆)Alkylenrest, der gegebenenfalls mit einer weiteren Hydroxygruppe substituiert sein kann, bedeutet, wobei R₃, R₄ und R₅ gleich oder verschieden sein können, oder b) 1,5 bis 20 Gew.% bezogen auf Melamin, an Aminen der Formel IIIa und/oder IIIb, die Melamin und Formaldehyd in einem molaren Verhältnis von 1 : 1,2 bis 1 : 5 und Melamin und Harnstoff in einem molaren Verhältnis von 1 : 0,1 bis 1 : 2,8 enthält, zur Herstellung von modifizierten Melamin-Formaldehydharzen.

7. Verwendung eines Melamin-Formaldehydharzes, das 40 bis 60 Gew.% an Amin der Formel IIIa und/oder IIIb und Melamin und Formaldehyd in einem molaren Verhältnis von 1 : 1,2 bis 1 : 5, sowie Melamin und Harnstoff in einem molaren Verhältnis von 1 : 0,1 bis 1 : 2,8 enthält, zur Herstellung von modifizierten Melamin-Formaldehydharzen.

8. Melaminharz-Laminate, dadurch gekennzeichnet, daß sie aus mit modifizierten Melaminharzen gemäß Anspruch 1 imprägnierten Papier- oder Gewebebahnen bestehen.

9. Verfahren zur Herstellung von Melaminharz-Laminaten, dadurch gekennzeichnet, daß eine Papier- oder Gewebebahn mit einem modifizierten Melaminharz gemäß Anspruch 1 imprägniert wird, und daß die bei der Imprägnierung erhaltenen Filme zu einem Laminat verpreßt, gegebenenfalls teilweise ausgehärtet, nachverformt und dabei vollständig ausgehärtet werden.

## Claims

1. Modified melamine-formaldhyde resin characterized in that it comprises a condensate of formaldehyde, melamine, urea and modifying agent comprising
a) a combination of 5 to 25 % by weight, based on the melamine, of dicyandiamide and 8 to 30 % by weight, based on the melamine, of polyalcohol of the formula
R₁-(R₂OH)₃ Ia
or
HOR₄-R₃-R₅O Ib
in which, in formula Ia, R₁ is a radical of the formula
C-(CH₂)ₙ-CH₃ where n is 0 to 3 II
and R₂ is a linear or branched (C₁ to C₄) alkylene radical and in formula Ib R₃ is a cycloalkylene radical with 6 C atoms or R₃, and R₄ and R₅ are a linear or branched (C₁ to C₆) alkylene radical, which can optionally be substituted by a further hydroxyl group, in which R₃, R₄ and R₅ can be identical or different, and/or
b) 1.5 to 20 % by weight of amines of the formulae
NR₉R₁₀-R₆-X IIIa
and/or
NR₉R₁₀-R₇-Y-R₈-X IIIb
in which R₆ and R₈ can be identical or different and, depending on the meaning of X, are a linear or branched or cyclic C₁ to C₁₂-alkyl or alkylene radical and R₇ is a linear or branched or cyclic C₁ to C₁₂-alkylene radical, R₉ and R₁₀ can be identical or different and are H or a linear or branched C₁ to C₁₂-alkyl radical, and X can be hydrogen, OH or NR₉R₁₀ and Y can be -O- or -NH-, the molar ratio of melamine to formaldehyde being 1:1.2 to 1:5 and that of melamine to urea being 1:0.1 to 1:2.8.

2. Modified melamine-formaldehyde resin according to Claim 1, characterized in that the modifying agent comprises a combination of dicyandiamide and polyalcohol of formula Ia or Ib.

3. Modified melamine-formaldehyde resin according to Claim 1, characterized in that the polyalcohol employed is trimethylolpropane, trimethylolethane, trishydroxyethyl isocyanurate, neopentylglycol, 1,4-dimethylolcyclohexane, 4-methyl-2,4-pentanediol, 1,6-hexanediol, 3-methyl-1,3,5-pentanediol [sic] or 2,2,4-trimethyl-1,3-pentanediol or a mixture thereof.

4. Modified melamine-formaldehyde resin according to Claim 1, characterized in that it comprises melamine and formaldehyde in a molar ratio of 1:1.4 to 1:2.8 and melamine and urea in a molar ratio of 1:0.15 to 1:1.

5. Modified melamine-formaldehyde resin according to Claim 1, characterized in that it is present in liquid [lacuna] or spray-dried in powder form.

6. Use of a mixture of formaldehyde, urea, melamine and a) 5 to 25 % by weight, based on the melamine, of dicyandiamide and 8 to 30 % by weight, based on the melamine, of polyalcohol of the formula
R₁-(R₂OH)₃ Ia
or
HOR₄-R₃-R₅OH Ib
in which, in the formula Ia, R₁ is a radical of the formula
C-(CH₂)ₙ-CH₃ where n is 0 to 3 II
and R₂ is a linear or branched (C₁ to C₄)-alkylene radical, and in the formula Ib, R₃ is a cycloalkylene radical having 6 C atoms or R₃, like R₄ and R₅, is a linear or branched (C₁ to C₆)-alkylene radical, which can optionally be substituted by a further hydroxyl group, where R₃, R₄ and R₅ can be identical or different, or b) 1.5 to 20 % by weight, based on the melamine, of amines of the formula IIIa and/or IIIb which comprises melamine and formaldehyde in a molar ratio of 1:1.2 to 1:5 and melamine and urea in a molar ratio of 1:0.1 to 1:2.8, for the preparation of a modified melamine-formaldehyde resin.

7. Use of a melamine-formaldehyde resin which comprises 40 to 60 % by weight of amine of the formula IIIa and/or IIIb and melamine and formaldehyde in a molar ratio of 1:1.2 to 1:5 and melamine and urea in a molar ratio of 1:0.1 to 1:2.8, for the preparation of a modified melamine-formaldehyde resin.

8. Melamine resin laminate, characterized in that it comprises webs of paper or fabric impregnated with a modified melamine resin according to Claim 1.

9. Process for the production of a melamine resin laminate characterized in that it comprises impregnating a web of paper or fabric with a modified melamine resin according to Claim 1, pressing the films obtained during the impregnation to give a laminate, partly curing the laminate, if appropriate, and postforming and as a result completely curing it.

## Revendications

1. Résines de mélamine-formaldéhyde modifiées, caractérisées en ce qu'elles sont constituées d'un produit de condensation de formaldéhyde, de mélamine, d'urée et d'agent de modification, comprenant
a) une combinaison de 5 à 25 pour cent en poids, par rapport à la mélamine, de dicyanodiamide et de 8 à 30 pour cent en poids, par rapport à la mélamine, de polyalcool de formule
R₁-(R₂OH)₃ Ia
ou
HOR₄-R₃-R₅OH Ib
où dans la formule Ia R₁ représente un radical de formule
C-(CH₂)ₙ-CH₃ avec n valant de 0 à 3 II
et R₂ représente un radical alkylène en (C₁ à C₄) linéaire ou ramifié, et dans la formule Ib, R₃ représente un radical cycloalkylène ayant 6 atomes de carbone ou R₃, comme R₄ et R₅, représentent un radical alkylène en (C₁ à C₆) linéaire ou ramifié qui peut être éventuellement substitué par un autre groupe hydroxy, où R₃, R₄ et R₅, peuvent être identiques ou différents, et/ou
b) de 1,5 à 20 pour cent en poids d'amines de formules
NR₉R₁₀ - R₆ - X IIIa
et/ou
NR₉R₁₀ - R₇ - Y - R₈ - X IIIb
où R₆ et R₈ peuvent être identiques ou différents et représentent, en fonction de la signification de X, un radical alkyle ou alkylène en C₁ à C₁₂ linéaire, ramifié ou cyclique, et R₇ représente un radical alkylène en C₁ à C₁₂ linéaire, ramifié ou cyclique, R₉ et R₁₀ peuvent être identiques ou différents et représentent H ou un radical alkyle en C₁ à C₁₂ linéaire ou ramifié, et X peut être un hydrogène, OH ou NR₉R₁₀ et Y peut être -O- ou -NH-, le rapport molaire entre la mélamine et le formaldéhyde étant de 1:1,2 à 1:5 et celui entre la mélamine et l'urée de 1:0,1 à 1:2,8.

2. Résines de mélamine-formaldéhyde modifiées selon la revendication 1, caractérisées en ce que l'agent de modification comprend une combinaison de dicyanodiamide et de polyalcool de formule Ia ou Ib.

3. Résines de mélamine-formaldéhyde modifiées selon la revendication 1, caractérisées en ce que l'on utilise, en tant que polyalcool, le triméthylolpropane, le triméthyloléthane, le tris-hydroxyéthylisocyanurate, le néopentylglycol, le 1,4-diméthylolcyclohexane, le 4-méthyl-2,4-pentanediol, le 1,6-hexanediol, le 3-méthyl-1,3,5-pentanediol ou le 2,2,4-triméthyl-1,3-pentanediol ou leurs mélanges.

4. Résines de mélamine-formaldéhyde modifiées selon la revendication 1, caractérisées en ce qu'elles comprennent de la mélamine et du formaldéhyde en un rapport molaire de 1:1,4 à 1:2,8 et de la mélamine et de l'urée en un rapport molaire de 1:0,15 à 1:1.

5. Résines de mélamine-formaldéhyde modifiées selon la revendication 1, caractérisées en ce qu'elles se présentent sous forme liquide ou sous forme de poudre séchée par pulvérisation.

6. Utilisation d'un mélange de formaldéhyde, d'urée, de mélamine et a) 5 à 25 pour cent en poids, par rapport à la mélamine, de dicyanodiamide et de 8 à 30 pour cent en poids, par rapport à la mélamine, de polyalcool de formule
R₁-(R₂OH)₃ Ia
ou
HOR₄-R₃-R₅OH Ib
où dans la formule Ia R₁ représente un radical de formule
C-(CH₂)ₙ-CH₃ avec n valant de 0 à 3 II
et R₂ représente un radical alkylène en (C₁ à C₄) linéaire ou ramifié, et dans la formule Ib, R₃ représente un radical cycloalkylène ayant 6 atomes de carbone ou R₃, comme R₄ et R₅, représente un radical alkylène en (C₁ à C₆) linéaire ou ramifié qui peut être éventuellement substitué par un autre groupe hydroxy, où R₃, R₄ et R₅, peuvent être identiques ou différents, ou b) de 1,5 à 20 pour cent en poids, par rapport à la mélamine, d'amines de formule IIIa et/ou IIIb, qui comprend de la mélamine et du formaldéhyde en un rapport molaire de 1:1,2 à 1:5 et de la mélamine et de l'urée en un rapport molaire de 1:0,1 à 1:2,8, en vue de préparer des résines de mélamine-formaldéhyde modifiées.

7. Utilisation d'une résine de mélamine-formaldéhyde comprenant de 40 à 60 pour cent en poids d'une amine de formule IIIa et/ou IIIb et de la mélamine et du formaldéhyde en un rapport molaire de 1:1,2 à 1:5, ainsi que de la mélamine et de l'urée en un rapport molaire de 1:0,1 à 1:2,8, en vue de préparer des résines de mélamine-formaldéhyde modifiées.

8. Stratifiés de résine mélaminique caractérisés en ce qu'ils sont constitués de bandes de papier ou de tissu imprégnées de résines mélaminiques modifiées selon la revendication 1.

9. Procédé de production de stratifiés de résine mélaminique, caractérisé en ce qu'une bande de papier ou de tissu est imprégnée d'une résine mélaminique modifiée selon la revendication 1 et en ce que les films obtenus lors de l'imprégnation sont comprimés pour donner un stratifié, éventuellement durci partiellement, puis façonnés et ainsi entièrement durcis.
